# EUROPEAN PATENT APPLICATION

(11) **EP 4 527 619 A1**
(43) Date of publication of application: **26.03.2025**
(21) Application number: 23807304.3
(22) Date of filing: 31.03.2023
(51) Int. Cl.: B32B 27/36, C09J 5/06, C09J 11/06, C08L 101/16, C09J 167/04, B32B 37/12

(54) **COMPOSITION FOR HOT-MELT ADHESIVE**

(30) Priority: 16.05.2022 JP 2022079932
(71) Applicant: Kaneka Corporation, Osaka-shi, Osaka 530-8288 (JP)
(72) Inventor: TANAKA, Hidenori, Osaka-shi, Osaka 530-8288 (JP)
(74) Representative: Vossius & Partner Patentanwälte Rechtsanwälte mbB
(86) International application number: PCT/JP2023/013521
(87) International publication number: WO 2023/223689

(57) **Abstract**

Provided is a composition for hot melt adhesive, the composition containing a poly(3-hydroxyalkanoate)-based resin and having a reduced melt viscosity and favorable mechanical properties.

The composition for hot melt adhesive contains a poly(3-hydroxyalkanoate)-based resin (A) and a polycaprolactone (B). The poly(3-hydroxyalkanoate)-based resin (A) may be a poly(3-hydroxybutyrate-co-3-hydroxyhexanoate) copolymer. A layered body can be produced by: heat-melting the composition for hot melt adhesive; applying the heat-melted composition to a first base material and then affixing a surface of the first base material on which the composition has been applied to a second base material; and cooling the composition to adhere the first base material and the second base material together.

## Description

### Technical Field

The present invention relates to a composition for hot melt adhesive.

### Background Art

A hot melt adhesive is an adhesive that contains a thermoplastic resin as a major component and that is solid at normal temperature. Hot melt adhesives are used for, for example, sealing a cardboard box or a carton.

When using a hot melt adhesive, for example, a hot gun or the like is used to heat-melt the adhesive, and the heat-melted adhesive is applied to a surface to be adhered.

Thereafter, base materials are affixed to each other, and then the adhesive therebetween is cooled and solidified. In this manner, the base materials can be adhered to each other.

Examples of a conventionally known resin material that serves as a major component of such a hot melt adhesive include ethylene-vinyl acetate (EVA) copolymers, ethylene-acrylate copolymers, polyolefins, polyamides, polyesters, polycarbonates, and synthetic rubbers.

Currently, biodegradable plastics have been actively developed as materials that can solve problems caused by plastic wastes, i.e., the problems that result in a burden on the global environment, such as harmful effects on the ecosystem, generation of harmful gas during combustion of the plastic wastes, and global warming due to a large amount of heat generated by the combustion of the plastic wastes.

Patent Literature 1 discloses a hot melt adhesive utilizing a biodegradable plastic. Specifically, Patent Literature 1 discloses a hot melt adhesive whose major component is a polymer that contains: a lactic acid block; and an aliphatic polyester block that is constituted by a diol and a dicarboxylic acid.

However, although a biodegradable plastic such as polylactic acid is biodegradable in a compost or the like, such a biodegradable plastic cannot be expected to be biodegraded within a short period of time if it is placed in an actual ocean environment where the temperature is low.

In this respect, poly(3-hydroxyalkanoate)-based resins have been drawing attention, because biodegradation thereof can progress even under seawater.

Patent Literature 2 discloses utilizing, as a biodegradable adhesive, a solution of a poly(3-hydroxybutyrate-co-3-hydroxyhexanoate) copolymer that is one kind of poly(3-hydroxyalkanoate)-based resin and an organic solvent.

However, Patent Literature 2 is silent on utilizing any poly(3-hydroxyalkanoate)-based resin in a hot melt adhesive.

### Citation List

### Patent Literature

PTL 1: Japanese Laid-Open Patent Application Publication No. 2021-102775
PTL 2: WO 2021/153250

### Summary of Invention

### Technical Problem

The inventor of the present invention has conducted studies, and as a result of the studies, the inventor has found out that, generally speaking, poly(3-hydroxyalkanoate)-based resins have high melt viscosity and it is difficult to heat-melt a poly(3-hydroxyalkanoate)-based resin and apply it to a base material as a hot melt adhesive. The inventor has also found out that in a case where a poly(3-hydroxyalkanoate)-based resin having a relatively low molecular weight is used, although the melt viscosity of such a poly(3-hydroxyalkanoate)-based resin is reduced, the mechanical properties thereof are lowered, which is another problem.

In view of the above, an object of the present invention is to provide a composition for hot melt adhesive, the composition containing a poly(3-hydroxyalkanoate)-based resin and having a reduced melt viscosity and favorable mechanical properties.

### Solution to Problem

The inventor of the present invention and others conducted diligent studies, and as a result of the studies, they have found out that by configuring a hot melt adhesive by using a poly(3-hydroxyalkanoate)-based resin together with a polycaprolactone that is one kind of biodegradable resin, it is possible to provide a composition for hot melt adhesive, the composition having a reduced melt viscosity and favorable mechanical properties. Based on the finding, they have arrived at the present invention.

Specifically, the present invention relates to a composition for hot melt adhesive, the composition containing a poly(3-hydroxyalkanoate)-based resin (A) and a polycaprolactone (B).

The present invention also relates to a method of producing a layered body, the method including: heat-melting the composition for hot melt adhesive; applying the heat-melted composition to a first base material and then affixing a surface of the first base material on which the composition has been applied to a second base material; and cooling the composition to adhere the first base material and the second base material together.

### Advantageous Effects of Invention

The present invention makes it possible to provide a composition for hot melt adhesive, the composition containing a poly(3-hydroxyalkanoate)-based resin and having a reduced melt viscosity and favorable mechanical properties.

### Description of Embodiments

Hereinafter, an embodiment of the present invention is described. The present invention is not limited to the embodiment described below.

A composition for hot melt adhesive according to the present embodiment contains, at least, a poly(3-hydroxyalkanoate)-based resin (A) and a polycaprolactone (B).

### <Poly(3-hydroxyalkanoate)-based resin (A)>

Poly(3-hydroxyalkanoate)-based resin is a collective term that refers to polymers each containing, as a monomer unit, at least 3-hydroxyalkanoic acid. Generally speaking, poly(3-hydroxyalkanoate)-based resins are biodegradable. In the description below, there are cases where a poly(3-hydroxyalkanoate)-based resin is abbreviated as a P3HA. The P3HA is an aliphatic polyester, and is preferably a polyester containing no aromatic ring. Only one kind of P3HA may be used, or two or more kinds of P3HAs may be used in combination.

Preferably, the P3HA is a polyester that contains, as an essential repeating unit, a 3-hydroxyalkanoic acid repeating unit expressed by the following formula: [-CHR-CH₂-CO-O-] (wherein R is an alkyl group represented by CₙH₂ₙ₊₁ and n is an integer of 1 or greater and 15 or less). The P3HA preferably contains 50 mol% or greater, and more preferably 70 mol% or greater, of the 3-hydroxyalkanoic acid repeating unit expressed by the above formula, with respect to all of the monomer repeating units (100 mol%).

The P3HA may be a homopolymer, or may be a copolymer. In a case where the P3HA is a copolymer, the copolymer may contain two or more kinds of repeating units expressed by the above formula, or may contain a repeating unit expressed by the above formula and other repeating unit(s). The type of copolymerization is not particularly limited, and may be, for example, random copolymerization, alternating copolymerization, block copolymerization, or graft copolymerization. Random copolymerization is preferable since it is readily available.

Specific examples of the P3HA include: poly(3-hydroxybutyrate) (abbreviated as P3HB); poly(3-hydroxybutyrate-co-3-hydroxyhexanoate) (abbreviated as P3HB3HH); poly(3-hydroxybutyrate-co-3-hydroxyvalerate) (abbreviated as P3HB3HV); poly(3-hydroxybutyrate-co-4-hydroxybutyrate) (abbreviated as P3HB4HB); poly(3-hydroxybutyrate-co-3-hydroxyoctanoate) (abbreviated as P3HB3HO); poly(3-hydroxybutyrate-co-3-hydroxyoctadecanoate) (abbreviated as P3HB3HOD); poly(3-hydroxybutyrate-co-3-hydroxydecanoate) (abbreviated as P3HB3HD); and poly(3-hydroxybutyrate-co-3-hydroxyvalerate-co-3-hydroxyhexanoate) (abbreviated as P3HB3HV3HH). Among these, P3HB, P3HB3HH, P3HB3HV, and P3HB4HB are preferable since the industrial production thereof is easy.

The P3HB3HH, which is a copolymer of 3-hydroxybutyrate and 3-hydroxyhexanoic acid, is particularly preferable for the following reasons: by changing the composition ratio of the repeating units in the P3HA, the melting point or crystallization degree of the PHA can be changed, and consequently, physical properties such as the Young's modulus and thermal resistance can be changed and physical properties intermediate between polypropylene and polyethylene can be imparted; and in addition, the industrial production of the P3HB3HH is easy, and the P3HB3HH is a plastic that has useful physical properties.

The P3HA can be produced by microorganisms. Such a microorganism-derived P3HA is usually a P3HA constituted only by a D-body (R-body) hydroxyalkanoic acid repeating unit. Among microorganism-derived P3HAs, in consideration of the ease of the industrial production thereof, P3HB and P3HB3HH are preferable, and P3HB3HH is more preferable.

In a case where the P3HA contains a 3-hydroxybutyrate (3HB) unit, from the viewpoint of a balance between flexibility or workability and initial fixability, the average content ratio of the repeating units in the P3HA is such that the average content ratio of the 3-hydroxybutyrate unit / the other hydroxyalkanoate unit (3-hydroxyhexanoate unit in a case where the P3HA is P3HB3HH) is preferably 97 / 3 to 75 / 25 (mol / mol), more preferably 95 / 5 to 80 / 20 (mol / mol), and particularly preferably 95 / 5 to 85 / 15 (mol / mol).

If the average content ratio of the other hydroxyalkanoate unit in the P3HA is 3 mol% or greater, the flexibility of the P3HA can be favorable, and in addition, the melting point of the P3HA is lowered and the workability when the composition for hot melt adhesive is melted and applied can be favorable. If the average content ratio of the other hydroxyalkanoate unit in the P3HA is 25 mol% or less, an appropriate crystallization rate can be achieved, and the initial fixability when the composition for hot melt adhesive is melted and applied to a base material and the base material and the other base material are affixed together can be improved.

As the P3HA, two or more kinds of P3HAs having different repeating unit average content ratios from each other may be used in combination. In this case, the aforementioned numerical value ranges of the average content ratio are the numerical value ranges of the average content ratio of the repeating units in the entire mixture of the two or more kinds of P3HAs contained in the composition for hot melt adhesive.

The average content ratio of the repeating units in the P3HA can be measured, for example, by gas chromatography after hydrolyzing or alcohol-esterifying the P3HA into monomers (see WO 2014/020838, for example).

The molecular weight of the P3HA is not particularly limited. From the viewpoint of a balance between adhesive force and workability when the composition for hot melt adhesive is melted and applied, the weight-average molecular weight of the P3HA is preferably 10,000 to 1,500,000, more preferably 100,000 to 1,000,000, and yet more preferably 150,000 to 800,000. If the weight-average molecular weight is 10,000 or greater, the strength of the adhesive layer is favorable, which makes it possible to achieve sufficient adhesive force. On the other hand, if the weight-average molecular weight is 1,500,000 or less, the melt viscosity is reduced and the workability when the composition for hot melt adhesive is melted and applied can be favorable.

As the P3HA, two or more kinds of P3HAs having different weight-average molecular weights from each other may be used in combination. In particular, a P3HA having a relatively high molecular weight and a P3HA having a relatively low molecular weight may be used in combination, because such a combination of P3HAs is particularly excellent in terms of a balance between reduction of the melt viscosity and favorability of mechanical properties. The weight-average molecular weight of each of these two kinds of P3HAs can be suitably selected within the aforementioned weight-average molecular weight ranges.

The weight-average molecular weight can be measured by using a gel permeation chromatograph (GPC) ("Shodex GPC-101" available from Showa Denko K. K.), a polystyrene gel column ("Shodex K-804" available from Showa Denko K. K.), and chloroform as a mobile phase, and can be determined as a molecular weight in terms of polystyrene. The column used in the GPC may be any column suitable for measuring the molecular weight.

The microorganisms that produce the P3HA are not particularly limited, so long as they have the ability to produce the P3HA. For example, Bacillus megaterium is the first discovered P3HB-producing bacteria, which was discovered in 1925, and also, natural microorganisms such as Cupriavidus necator (formerly classified as Alcaligenes eutrophus, Ralstonia eutropha) and Alcaligenes latus are known as other P3HB-producing bacteria. These microorganisms accumulate P3HB in their cells.

As bacteria that produce copolymers of 3HB and another hydroxyalkanoate, for example, Aeromonas caviae that produces P3HB3HV and P3HB3HH and Alcaligenes eutrophus that produces P3HB4HB are known. Particularly, for P3HB3HH production, Alcaligenes eutrophus AC32, FERM BP-6038 (T. Fukui, Y. Doi, J. Bateriol., 179, pp. 4821-4830 (1997)), into which a P3HA synthase group gene has been introduced to improve P3HB3HH productivity, is preferable. These microorganisms are cultured under proper conditions, and the resulting microorganism cells having P3HA accumulated therein are used. Other than the above microorganisms, genetically-modified microorganisms, into which various P3HA synthesis-related genes have been introduced in accordance with the intended kind of P3HA to be produced, may be used, and culture conditions including a substrate type may be optimized.

### <Polycaprolactone (B)>

Polycaprolactone is a polyester containing a monomer unit expressed by the following formula: [-(CH₂)₅-CO-O-]. Hereinafter, there are cases where polycaprolactone is abbreviated as PCL. Usually, PCL can be produced by ring-opening polymerization of ε-caprolactone by using a cationic or anionic initiator. In some cases, an organic metal catalyst is used to facilitate the polymerization. It should be noted that the PCL used herein may be obtained from a different PLC production method. Also, the terminal capping structure is not particularly limited. Generally speaking, PCL has a melting point of 50 to 65°C, a crystallization temperature of 10 to 30°C, and a glass transition temperature of -50 to -60°C. However, these temperature ranges are non-limiting examples.

The molecular weight of the PCL is not particularly limited. From the viewpoint of the balance between adhesive force and workability when the composition for hot melt adhesive is melted and applied, the weight-average molecular weight of the PCL is preferably 1,000 to 500,000, more preferably 5,000 to 400,000, yet more preferably 10,000 to 300,000, and particularly preferably 20,000 to 250,000. If the weight-average molecular weight is 1,000 or greater, the strength of the adhesive layer is favorable, which makes it possible to achieve sufficient adhesive force. On the other hand, if the weight-average molecular weight is 500,000 or less, the melt viscosity is reduced and the workability when the composition for hot melt adhesive is melted and applied can be favorable.

Particularly from the viewpoint of further improvement of mechanical properties such as strength and elongation, the weight-average molecular weight of the PCL is preferably 100,000 or greater, and more preferably 120,000 or greater.

On the other hand, from the viewpoint of further reducing the melt viscosity, the weight-average molecular weight of the PCL is preferably less than 100,000, more preferably less than 90,000, and yet more preferably less than 70,000.

As the PCL, two or more kinds of PCLs having different weight-average molecular weights from each other may be used in combination. In particular, a mode in which a first PCL having a relatively high molecular weight and a second PCL having a relatively low molecular weight are used in combination is preferable, because such a combination of PCLs is particularly excellent in terms of the balance between reduction of the melt viscosity and favorability of the mechanical properties.

In this mode, the weight-average molecular weight of the first PCL is preferably 100,000 or greater, and more preferably 120,000 or greater. Also, the weight-average molecular weight of the second PCL is preferably 70,000 or less, more preferably 50,000 or less, and yet more preferably 40,000 or less.

Although the use ratio of the first PCL having a relatively high molecular weight to the second PCL having a relatively low molecular weight is not particularly limited, the weight ratio of the first PCL / the second PCL is preferably 95 / 5 to 40 / 60, more preferably 90 / 10 to *50* / *50,* and yet more preferably 85 / 15 to 60 / 40. By using both of the PCLs within these ranges, improvement of the mechanical properties by the first PCL and reduction of the melt viscosity by the second PCL can be both achieved to a greater degree.

The weight-average molecular weight of the PCL can be measured by the same measurement method as the above-described measurement method adopted in the case of measuring the weight-average molecular weight of the P3HA.

In the composition for hot melt adhesive, the content ratio of the poly(3-hydroxyalkanoate)-based resin (A) to the polycaprolactone (B) can be suitably set. Preferably, the weight ratio of the component (A) / the component (B) is 95 / 5 to 5 / 95. Within this range, it is possible to provide the composition for hot melt adhesive, in which the seawater-degradable poly(3-hydroxyalkanoate)-based resin is used and which has a reduced melt viscosity and favorable mechanical properties. The above weight ratio is more preferably 90 / 10 to 10 / 90, yet more preferably 80 / 20 to 20 / 80, and particularly preferably 70 / 30 to 30 / 70. The above weight ratio may be 95 / 5 to 50 / 50, or may be 50 / 50 to 5 / 95. From the viewpoint of further reducing the melt viscosity, the above weight ratio is preferably 50 / 50 to 5 / 95.

### <Glycerol fatty acid ester (C)>

The composition for hot melt adhesive according to the present embodiment may further contain a glycerol fatty acid ester (C). By blending the glycerol fatty acid ester (C) in the composition for hot melt adhesive, the melt viscosity can be greatly reduced while maintaining the mechanical properties to a certain degree.

As the glycerol fatty acid ester, a monoester, diester, or triester of glycerol can be used. From the viewpoint of compatibility with the poly(3-hydroxyalkanoate)-based resin (A) and the polycaprolactone (B), a triester of glycerol is preferable. Among various triesters of glycerol, a glycerol diacetomonoester is particularly preferable. Specific examples of the glycerol diacetomonoester include glycerol diacetomonolaurate, glycerol diacetomonooleate, glycerol diacetomonostearate, glycerol diacetomonocaprylate, and glycerol diacetomonodecanoate. Among these, glycerol diacetomonolaurate is preferable. Examples of a commercially available product of the modified glycerol-based compound include "BIOCIZER" (registered trademark) and "Rikemal" (registered trademark) PL series available from RIKEN VITAMIN CO., LTD.

In the composition for hot melt adhesive, the content of the glycerol fatty acid ester (C) is preferably 0 to 50 parts by weight with respect to the total of 100 parts by weight of the poly(3-hydroxyalkanoate)-based resin (A) and the polycaprolactone (B). The lower limit value of the content of the glycerol fatty acid ester (C) is preferably 0.1 parts by weight or greater, more preferably 1 part by weight or greater, and yet more preferably 5 parts by weight or greater. The upper limit value of the content of the glycerol fatty acid ester (C) is preferably 30 parts by weight or less, more preferably 20 parts by weight or less, and yet more preferably 15 parts by weight or less.

### <Other Components>

The composition for hot melt adhesive may contain, as resin components, only the poly(3-hydroxyalkanoate)-based resin (A) and the polycaprolactone (B). Alternatively, the composition for hot melt adhesive may further contain other resins. The other resins are preferably biodegradable resins. Examples of the other resins include: aliphatic polyester-based resins, such as polybutylene succinate and polylactic acid; and aliphatic aromatic polyester-based resins, such as polybutylene adipate terephthalate, polybutylene sebacate terephthalate, and polybutylene azelate terephthalate.

The content of the other resins may be about 0 to 30 parts by weight, preferably 0 to 10 parts by weight, more preferably 0 to 5 parts by weight, and particularly preferably 0 to 1 part by weight with respect to the total of 100 parts by weight of the poly(3-hydroxyalkanoate)-based resin (A) and the polycaprolactone (B).

The composition for hot melt adhesive may further contain a plasticizer in addition to the glycerol fatty acid ester (C). The plasticizer to be additionally contained is not particularly limited, but may be, for example, a dibasic acid ester-based compound, an adipic acid ester-based compound, a polyether ester-based compound, a benzoic acid ester-based compound, a citric acid ester-based compound, and an isosorbide ester-based compound.

Examples of the dibasic acid ester-based compound include dibutyl adipate, diisobutyl adipate, bis(2-ethylhexyl) adipate, diisononyl adipate, di-isodecyl adipate, bis[2-(2-butoxyethoxy) ethyl] adipate, bis[2-(2-butoxyethoxy) ethyl] adipate, bis(2-ethylhexyl) azelate, dibutyl sebacate, bis(2-ethylhexyl) sebacate, diethyl succinate, and mixed dibasic acid ester compounds.

Examples of the adipic acid ester-based compound include diethylhexyl adipate, dioctyl adipate, and diisononyl adipate.

Examples of the polyether ester-based compound include polyethylene glycol dibenzoate, polyethylene glycol dicaprylate, and polyethylene glycol diisostearate.

The content of the plasticizer except the glycerol fatty acid ester (C) may be about 0 to 30 parts by weight, preferably 0 to 10 parts by weight, more preferably 0 to 5 parts by weight, and particularly preferably 0 to 1 part by weight with respect to the total of 100 parts by weight of the poly(3-hydroxyalkanoate)-based resin (A) and the polycaprolactone (B).

The composition for hot melt adhesive may contain an additive that is commonly used in the field of adhesive. Examples of such an additive include: inorganic fillers, such as talc, calcium carbonate, mica, silica, titanium oxide, and alumina; organic fillers, such as rice husks, wood flour, used paper such as newspaper, various starches, and cellulose; colorants, such as a pigment and dye; odor absorbents, such as activated carbon and zeolite; fragrances, such as vanillin and dextrin; oxidation inhibitors; antioxidants; weatherability improving agents; ultraviolet absorbers; crystal nucleating agents; lubricants; mold release agents; water repellents; antibacterial agents; slidability improving agents; tackifiers; fillers; and chemical agents. The composition for hot melt adhesive may contain only one kind of additive, or may contain two or more kinds of additives. The solid content concentration of the additive(s) can be suitably set in accordance with the intended use of the additive(s).

### <Composition for hot melt adhesive>

The composition for hot melt adhesive according to the present embodiment is solid or semi-solid at normal temperature (usually about 15 to 30°C). At normal temperature, the composition does not exhibit suitable fluidity for its application. As a result of the composition being heated to an appropriate temperature and thereby melted, the composition exhibits suitable fluidity for its application.

The composition for hot melt adhesive contains substantially no volatile organic solvent or water. Specifically, the total amount of organic solvent and water in the composition for hot melt adhesive is preferably 10% by weight or less, more preferably 1% by weight or less, and yet more preferably 0.1% by weight or less.

The composition for hot melt adhesive may be directly used as a hot melt adhesive as it is, or may be used as a hot melt adhesive after additionally blending a suitable additive into the composition or after subjecting the composition to a process such as shape adjustment.

The shape of the composition for hot melt adhesive is not particularly limited. Common shapes for hot melt adhesives are adoptable. Specifically, the composition for hot melt adhesive may be in the shape of, for example, a stick, pellets, a sheet, or a film.

The composition for hot melt adhesive has a relatively low viscosity when heat-melted, i.e., has a relatively low melt viscosity, which makes it possible to realize favorable workability of the composition for hot melt adhesive when it is melted and applied to a base material.

As an index for indicating such a relatively low melt viscosity, when the melt viscosity of the composition for hot melt adhesive is measured by using a Capilograph at a shear rate of 1.2 × 10²s⁻¹ and a temperature of 150°C, the melt viscosity thus measured is preferably 2,900 Pa·s or less, more preferably 2,000 Pa·s or less, yet more preferably 1,500 Pa·s or less, and particularly preferably 1,000 Pa·s or less.

The composition for hot melt adhesive after being heat-melted can be used to adhere two base materials together. Specifically, the composition for hot melt adhesive is heat-melted, and then applied to a first base material. Thereafter, a surface of the first base material on which the composition has been applied is affixed to a second base material. Then, the composition is cooled and solidified, and thereby the first base material and the second base material can be adhered together. When heating and applying the composition for hot melt adhesive to the first base material, a glue gun or hot gun can be used.

Alternatively, after the composition for hot melt adhesive is placed on each of the first base material and the second base material, the composition may be heat-melted, and then the composition may be cooled. Also in this manner, the first base material and the second base material can be adhered together.

The heating temperature to melt the composition for hot melt adhesive can be suitably set in consideration of the melting point of the composition for hot melt adhesive. For example, the heating temperature may be within the range of about 100 to 180°C.

A base material on which the composition for hot melt adhesive can be used is not limited to a particular kind. Since the composition for hot melt adhesive is biodegradable, the base material is preferably biodegradable. It should be noted that the shape of the base material is not particularly limited.

The biodegradable base material is not particularly limited. Examples of the biodegradable base material include paper (containing cellulose as its major component), cellophane, cellulose esters, polyvinyl alcohols, polyamino acids, polyglycolic acids, pullulan, and biodegradable polyesters. Also, an inorganic substance, such as aluminum or silica, may be vapor-deposited on these base materials, which may also be used as the base materials. Among these, paper or a biodegradable polyester is preferable since they are excellent in terms of thermal resistance and biodegradability.

The paper is not limited to a particular kind, and examples of the paper include cup base paper, one-side glazed paper, kraft paper, wood-free paper, coated paper, tissue paper, glassine paper, and paperboard.

The biodegradable polyester that can serve as the base material is not particularly limited. Examples of the biodegradable polyester include: aliphatic polyester resins, such as polybutylene succinate (PBS)-based resins, polycaprolactone-based resins, and polyhydroxyalkanoate-based resins; and aliphatic aromatic polyester resins, such as polybutylene adipate terephthalate (PBAT)-based resins, polybutylene sebacate terephthalate-based resins, and polybutylene succinate terephthalate-based resins.

To the base material, a water-resisting agent, a water repellent, an inorganic substance, etc. may be added as necessary. The base material may be subjected to surface treatment, such as oxygen barrier layer coating or water vapor barrier coating.

The use application in which the composition for hot melt adhesive is used is not particularly limited, and the composition can be used for various types of adhesion. Specific examples of the use application include sealing of a cardboard box, sealing of a carton (paper box), and assembling of sanitary materials (e.g., disposable diaper).

The following items each indicate a preferable mode of the present disclosure. The present invention is not limited to the following items.

### [Item 1]

A composition for hot melt adhesive, containing a poly(3-hydroxyalkanoate)-based resin (A) and a polycaprolactone (B).

### [Item 2]

The composition for hot melt adhesive according to item 1, wherein the poly(3-hydroxyalkanoate)-based resin (A) is a poly(3-hydroxybutyrate-co-3-hydroxyhexanoate) copolymer.

### [Item 3]

The composition for hot melt adhesive according to item 2, wherein an average content ratio of a 3-hydroxyhexanoate unit in the poly(3-hydroxybutyrate-co-3-hydroxyhexanoate) copolymer is 3 to 25 mol%.

### [Item 4]

The composition for hot melt adhesive according to any one of items 1 to 3, wherein the composition for hot melt adhesive has a melt viscosity of 2,900 Pa·s or less, the melt viscosity being measured at a shear rate of 1.2 × 10²s⁻¹ and a temperature of 150°C.

### [Item 5]

The composition for hot melt adhesive according to any one of items 1 to 4, wherein the poly(3-hydroxyalkanoate)-based resin (A) has a weight-average molecular weight of 100,000 to 1,000,000.

### [Item 6]

The composition for hot melt adhesive according to any one of items 1 to 5, wherein the polycaprolactone (B) has a weight-average molecular weight of 20,000 to 250,000.

### [Item 7]

The composition for hot melt adhesive according to any one of items 1 to 6, wherein the polycaprolactone (B) includes two or more kinds of polycaprolactones having different weight-average molecular weights from each other.

### [Item 8]

The composition for hot melt adhesive according to any one of items 1 to 7, wherein a weight ratio of the poly(3-hydroxyalkanoate)-based resin (A) / the polycaprolactone (B) is 95 / 5 to 5 / 95.

### [Item 9]

The composition for hot melt adhesive according to any one of items 1 to 8, further containing a glycerol fatty acid ester (C).

### [Item 10]

The composition for hot melt adhesive according to item 9, wherein the glycerol fatty acid ester (C) is glycerol diacetomonolaurate.

### [Item 11]

The composition for hot melt adhesive according to item 9 or 10, wherein a content of the glycerol fatty acid ester (C) is 50 parts by weight or less with respect to a total of 100 parts by weight of the poly(3-hydroxyalkanoate)-based resin (A) and the polycaprolactone (B).

### [Item 12]

A method of producing a layered body, the method including: heat-melting the composition for hot melt adhesive according to any one of items 1 to 11; applying the heat-melted composition to a first base material and then affixing a surface of the first base material on which the composition has been applied to a second base material; and cooling the composition to adhere the first base material and the second base material together.

### Examples

Hereinafter, the present invention is more specifically described with reference to Examples, but the present invention is not limited by these Examples in any way.

In Examples and Comparative Examples, raw materials indicated below were used.

### [Poly(3-hydroxyalkanoate)-based resins (A) that were used]

Poly(3-hydroxyalkanoate)-based resin (A-1): an average content ratio 3HB / 3HH = 89 / 11 (mol% / mol%) and a weight-average molecular weight of 600,000 g/mol.
Poly(3-hydroxyalkanoate)-based resin (A-2): an average content ratio 3HB / 3HH = 89 / 11 (mol% / mol%) and a weight-average molecular weight of 200,000 g/mol.

### [Polycaprolactones (B)]

(B-1): Poly-ε-caprolactone, available from FUJIFILM Wako Pure Chemical Corporation, having a weight-average molecular weight of 28,500.
(B-2): Capa 6250, available from Ingevity Corporation, having a weight-average molecular weight of 66,200.
(B-3): Capa 6400, available from Ingevity Corporation, having a weight-average molecular weight of 80,900.
(B-4): Capa 6500, available from Ingevity Corporation, having a weight-average molecular weight of 138,800.
(B-5): Capa 6800, available from Ingevity Corporation, having a weight-average molecular weight of 232,500.

Glycerol fatty acid ester (C) "BIOCIZER" available from RIKEN VITAMIN CO., LTD.

### [Weight-average molecular weight measurement method]

The weight-average molecular weight of each resin was measured by using a gel permeation chromatograph (GPC) ("Shodex GPC-101" available from Showa Denko K. K.), a polystyrene gel column ("Shodex K-804" available from Showa Denko K. K.), and chloroform as a mobile phase, and was determined as a molecular weight in terms of polystyrene.

### (Examples 1 to 42)

A total amount 40 g of the poly(3-hydroxyalkanoate)-based resin (A) and the polycaprolactone (B) was fed into a kneading and extruding test apparatus (Labo Plastmill available from Toyo Seiki Seisaku-Sho, Ltd.) with each of the weight ratios indicated in the tables, and kneaded therein for 5 to 10 minutes at 150°C.

In each of Examples 33 to 42, the total amount 40 g of (A) + (B) was 100 parts by weight, and the glycerol fatty acid ester (C) in parts by weight as indicated in the table was additionally fed into the kneading and extruding test apparatus, in which the mixture was kneaded in the same manner as above.

### (Comparative Examples 1 and 2)

In each of Comparative Examples 1 and 2, only the poly(3-hydroxyalkanoate)-based resin (A) was used as indicated in the table.

### [Melt Viscosity]

The melt viscosity of the kneaded product obtained in each Example as well as the melt viscosity of the poly(3-hydroxyalkanoate)-based resin (A) in each of Comparative Examples 1 and 2 was measured by using a Capilograph. The measurement temperature was set to 150°C. In each table, the melt viscosity (Pa·s) at an extrusion rate of 10 mm/min (shear rate of 1.2 × 10²s⁻¹) is indicated.

### [Tensile test]

The kneaded product obtained in each Example as well as the poly(3-hydroxyalkanoate)-based resin (A) in each of Comparative Examples 1 and 2 was subjected to press forming at 160°C, and thereby a sheet having a thickness of 100 µm was obtained. From the obtained sheet, a test piece in a No.3 dumbbell shape was cut out, which was used as a sample for a tensile test.

The tensile test was performed by using AG-2000A available from Shimadzu Corporation at a measurement temperature of 23°C and a tensile speed of 50 mm/min. In each table, a strength at break (MPa) and an elongation at break (%) in the tensile test of each sample are indicated.

**[Table 1]**

| Composition (parts by weight) | | | Comparative Examples | |
|---|---|---|---|---|
| | | | 1 | 2 |
| Poly(3-hydroxyalkanoate)-based resin (A) | | A-1 | 100 | |
| | | A-2 | | 100 |
| Polycaprolactone (B) | | B-1 | | |
| | | B-2 | | |
| | | B-3 | | |
| | | B-4 | | |
| | | B-5 | | |
| Melt viscosity | | (Pa·s) | 2989 | 543 |
| Tensile test | Strength at break | (MPa) | 17 | 23 |
| | Elongation at break | (%) | 281 | 5 |

**[Table 2]**

| Composition (parts by weight) | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Poly(3-hydroxyalkanoate)-based resin (A) | | A-1 | 80 | 80 | 80 | 60 | 40 | 20 | 80 | 60 | 40 | 20 |
| | | A-2 | | | | | | | | | | |
| Polycaprolactone (B) | | B-1 | | | | | | | | | | |
| | | B-2 | 20 | | | | | | | | | |
| | | B-3 | | 20 | | | | | | | | |
| | | B-4 | | | 20 | 40 | 60 | 80 | | | | |
| | | B-5 | | | | | | | 20 | 40 | 60 | 80 |
| Melt viscosity | | (Pa·s) | 1312 | 937 | 1997 | 1548 | 1123 | 855 | 2653 | 2421 | 2280 | 2024 |
| Tensile test | Strength at break | (MPa) | 15 | 14 | 26 | 27 | 27 | 34 | 28 | 39 | 42 | 41 |
| | Elongation at break | (%) | 172 | 149 | 371 | 374 | 358 | 468 | 367 | 475 | 508 | 512 |

**[Table 3]**

| Composition (parts by weight) | | | Examples | | | |
|---|---|---|---|---|---|---|
| | | | 11 | 12 | 13 | 14 |
| Poly(3-hydroxyalkanoate)-based resin (A) | | A-1 | | | | |
| | | A-2 | 20 | 40 | 20 | 20 |
| Polycaprolactone (B) | | B-1 | | | | 20 |
| | | B-2 | | | | |
| | | B-3 | | | | |
| | | B-4 | 80 | | | |
| | | B-5 | | 60 | 80 | 60 |
| Melt viscosity | | (Pa·s) | 375 | 971 | 1337 | 903 |
| Tensile test | Strength at break | (MPa) | 29 | 28 | 36 | 23 |
| | Elongation at break | (%) | 393 | 361 | 485 | 319 |

**[Table 4]**

| Composition (parts by weight) | | | Examples | | | | | | | | |
|---|---|---|---|---|---|---|---|---|---|---|---|
| | | | 15 | 16 | 17 | 18 | 19 | 20 | 21 | 22 | 23 |
| Poly(3-hydroxyalkanoate)-based resin (A) | | A-1 | 60 | 40 | 20 | 60 | 60 | 40 | 40 | 20 | 20 |
| | | A-2 | | | | | | | | | |
| Polycaprolactone (B) | | B-1 | 10 | 15 | 20 | 10 | 20 | 15 | 30 | 20 | 40 |
| | | B-2 | | | | | | | | | |
| | | B-3 | | | | | | | | | |
| | | B-4 | 30 | 45 | 60 | | | | | | |
| | | B-5 | | | | 30 | 20 | 45 | 30 | 60 | 40 |
| Melt viscosity | | (Pa·s) | 1160 | 714 | 437 | 1961 | 1368 | 1528 | 863 | 1132 | 736 |
| Tensile test | Strength at break | (MPa) | 24 | 27 | 22 | 29 | 19 | 28 | 22 | 31 | 28 |
| | Elongation at break | (%) | 344 | 391 | 288 | 398 | 269 | 394 | 308 | 444 | 403 |

**[Table 5]**

| Composition (parts by weight) | | | Examples | | | | | | | | |
|---|---|---|---|---|---|---|---|---|---|---|---|
| | | | 24 | 25 | 26 | 27 | 28 | 29 | 30 | 31 | 32 |
| Poly(3-hydroxyalkanoate)-based resin (A) | | A-1 | 50 | 40 | 30 | 50 | 40 | 30 | 30 | 20 | 10 |
| | | A-2 | 10 | 20 | 10 | 10 | 20 | 30 | 10 | 20 | 10 |
| Polycaprolactone (B) | | B-1 | 10 | 10 | 15 | 10 | 10 | 10 | 15 | 15 | 20 |
| | | B-2 | | | | | | | | | |
| | | B-3 | | | | | | | | | |
| | | B-4 | 30 | 30 | 45 | | | | | | |
| | | B-5 | | | | 30 | 30 | 30 | 45 | 45 | 60 |
| Melt viscosity | | (Pa s) | 1003 | 857 | 582 | 1648 | 1484 | 1311 | 1243 | 1168 | 1070 |
| Tensile test | Strength at break | (MPa) | 24 | 21 | 21 | 27 | 22 | 21 | 17 | 20 | 30 |
| | Elongation at break | (%) | 342 | 300 | 303 | 359 | 287 | 259 | 192 | 253 | 426 |

**[Table 6]**

| Composition (parts by weight) | | | Examples | | | | | | | | | |
|---|---|---|---|---|---|---|---|---|---|---|---|---|
| | | | 33 | 34 | 35 | 36 | 37 | 38 | 39 | 40 | 41 | 42 |
| Poly(3-hydroxyalkanoate)-based resin (A) | | A-1 | 40 | 40 | 30 | 30 | 20 | 20 | | | | |
| | | A-2 | | | 10 | 10 | | | 20 | 20 | 20 | 20 |
| Polycaprolactone (B) | | B-1 | 15 | 15 | 15 | 15 | 20 | 20 | | | | |
| | | B-2 | | | | | | | | | | |
| | | B-3 | | | | | | | | | | |
| | | B-4 | 45 | 45 | 45 | 45 | 60 | 60 | 80 | 80 | 80 | 80 |
| | | B-5 | | | | | | | | | | |
| Glycerol fatty acid ester (C) | | | 5 | 10 | 5 | 10 | 5 | 10 | 5 | 10 | 20 | 30 |
| Melt viscosity | | (Pa·s) | 499 | 243 | 445 | 366 | 390 | 294 | 444 | 354 | 134 | 129 |
| Tensile test | Strength at break | (MPa) | 17 | 18 | 15 | 13 | 20 | 22 | 18 | 18 | 13 | 13 |
| | Elongation at break | (%) | 243 | 291 | 198 | 153 | 271 | 352 | 287 | 340 | 261 | 198 |

Table 1 shows results of Comparative Examples 1 and 2, in each of which melt viscosity evaluation and tensile test evaluation were performed on the poly(3-hydroxyalkanoate)-based resin (A) alone. Although Comparative Example 1 exhibited relatively favorable mechanical properties, it is not suitable for use as a hot melt adhesive due to its high melt viscosity. On the other hand, Comparative Example 2, in which the poly(3-hydroxyalkanoate)-based resin (A) having a relatively low molecular weight was used, exhibited a lower melt viscosity value than that of Comparative Example 1. However, in Comparative Example 2, the elongation at break was significantly lower.

In each of Examples in Tables 2 to 6, melt viscosity evaluation and tensile test evaluation were performed on the kneaded product that was prepared by using both the poly(3-hydroxyalkanoate)-based resin (A) and the polycaprolactone (B). Each of these Examples exhibited a lower melt viscosity than that of Comparative Example 1, and was usable as a hot melt adhesive. Further, each of these Examples exhibited a higher elongation at break than that of Comparative Example 2, and exhibited favorable mechanical properties.

## Claims

1. A composition for hot melt adhesive, comprising:
a poly(3-hydroxyalkanoate)-based resin (A); and
a polycaprolactone (B).

2. The composition for hot melt adhesive according to claim 1, wherein
the poly(3-hydroxyalkanoate)-based resin (A) is a poly(3-hydroxybutyrate-co-3-hydroxyhexanoate) copolymer.

3. The composition for hot melt adhesive according to claim 2, wherein
an average content ratio of a 3-hydroxyhexanoate unit in the poly(3-hydroxybutyrate-co-3-hydroxyhexanoate) copolymer is 3 to 25 mol%.

4. The composition for hot melt adhesive according to claim 1 or 2, wherein
the composition for hot melt adhesive has a melt viscosity of 2,900 Pa·s or less, the melt viscosity being measured at a shear rate of 1.2 × 10²s⁻¹ and a temperature of 150°C.

5. The composition for hot melt adhesive according to claim 1 or 2, wherein
the poly(3-hydroxyalkanoate)-based resin (A) has a weight-average molecular weight of 100,000 to 1,000,000.

6. The composition for hot melt adhesive according to claim 1 or 2, wherein
the polycaprolactone (B) has a weight-average molecular weight of 20,000 to 250,000.

7. The composition for hot melt adhesive according to claim 1 or 2, wherein
the polycaprolactone (B) includes two or more kinds of polycaprolactones having different weight-average molecular weights from each other.

8. The composition for hot melt adhesive according to claim 1 or 2, wherein
a weight ratio of the poly(3-hydroxyalkanoate)-based resin (A) / the polycaprolactone (B) is 95 / 5 to 5 / 95.

9. The composition for hot melt adhesive according to claim 1 or 2, further comprising a glycerol fatty acid ester (C).

10. The composition for hot melt adhesive according to claim 9, wherein
the glycerol fatty acid ester (C) is glycerol diacetomonolaurate.

11. The composition for hot melt adhesive according to claim 9, wherein
a content of the glycerol fatty acid ester (C) is 50 parts by weight or less with respect to a total of 100 parts by weight of the poly(3-hydroxyalkanoate)-based resin (A) and the polycaprolactone (B).

12. A method of producing a layered body, the method comprising:
heat-melting the composition for hot melt adhesive according to claim 1 or 2;
applying the heat-melted composition to a first base material and then affixing a surface of the first base material on which the composition has been applied to a second base material; and
cooling the composition to adhere the first base material and the second base material together.
